(19) **Europäisches Patentamt**
**European Patent Office**
**Office européen des brevets**

(11) **EP 2 042 687 B1**

(12) **EUROPEAN PATENT SPECIFICATION**

(45) Date of publication and mention
of the grant of the patent:
**21.02.2018 Bulletin 2018/08**

(51) Int Cl.:
*E21D 11/38* *(2006.01)*   *B32B 27/18* *(2006.01)*
*B32B 27/28* *(2006.01)*   *C08J 7/04* *(2006.01)*

(21) Application number: **07744666.4**

(22) Date of filing: **04.06.2007**

(86) International application number:
**PCT/JP2007/061307**

(87) International publication number:
**WO 2007/142200 (13.12.2007 Gazette 2007/50)**

(54) **METHOD FOR PRODUCING A WATERPROOF SHEET FOR TUNNEL AND ITS USE**

VERFAHREN ZUR HERSTELLUNG EINES WASSERDICHTEN FLÄCHENGEBILDES FÜR TUNNEL
UND DESSEN VERWENDUNG

PROCÉDÉ DE PRÉPARATION POUR FEUILLE IMPERMÉABLE À L'EAU DESTINÉE À UN TUNNEL
ET SON UTLISATION

(84) Designated Contracting States:
**DE FR GB IT**

(30) Priority: **07.06.2006 JP 2006158321**
       **09.06.2006 JP 2006160865**

(43) Date of publication of application:
**01.04.2009 Bulletin 2009/14**

(60) Divisional application:
**17184026.7 / 3 263 833**

(73) Proprietors:
• **Kuraray Co., Ltd.**
  **Okayama 710-8622 (JP)**
• **RAILWAY TECHNICAL RESEARCH INSTITUTE**
  **Kokubunji-shi,**
  **Tokyo 185-8540 (JP)**

(72) Inventors:
• **ISE, Tomokazu**
  **Tokyo 1008115 (JP)**

• **KUSUDO, Kazumasa**
  **Okayama-shi, Okayama 7028601 (JP)**
• **NISHIYAMA, Masakazu**
  **Okayama-shi, Okayama 7028601 (JP)**
• **TANIGUCHI, Hidekazu**
  **Tokyo 1008115 (JP)**
• **YAGUCHI, Naoyuki**
  **Tokyo 1858540 (JP)**
• **TATEYAMA, Masaru**
  **Tokyo 1858540 (JP)**
• **MAMADA, Shogo**
  **Tokyo 1858540 (JP)**

(74) Representative: **Vossius & Partner**
**Patentanwälte Rechtsanwälte mbB**
**Siebertstrasse 3**
**81675 München (DE)**

(56) References cited:
**JP-A- 2000 080 894    JP-A- 2002 070 495**
**JP-A- 2002 294 015    JP-A- 2002 294 015**
**US-A1- 2005 106 967**

EP 2 042 687 B1

Printed by Jouve, 75001 PARIS (FR)

## Description

[Technical Field]

The present invention relates to a method of producing a waterproof sheet for a tunnel formed of a synthetic resin and to a use of the waterproof sheet obtained by the said method in building a tunnel. More specifically, it relates to a method of producing a waterproof sheet for a tunnel that is provided between the earth or the ground and a concrete tunnel structure for preventing water seeping from the earth or the ground from leaking into the tunnel upon tunnel construction by a mountain tunnel method (NATM) , a shield tunneling method and a cut and cover tunneling method in an urban area, and the like.

[Background Art]

In construction of a mountain tunnel, an underground tunnel in an urban area and the like, a mountain tunnel method (NATM), a shield tunneling method, a cut and cover tunneling method and the like have been conventionally employed, and in any case, a waterproof sheet has been used for preventing water from leaking from the earth or the ground into the tunnel.

The known waterproof sheet includes a waterproof sheet containing a sheet of a thermoplastic resin or a vulcanized synthetic resin having laminated on at least one surface thereof a crosslinked foamed body of a fluorine resin (see Patent Document 1), a waterproof sheet containing a propylene homopolymer block or a propylene-ethylene random copolymer block A having an ethylene content of 5% by weight or less and an ethylene-propylene random copolymer block B having a propylene content of 10% by weight or more (see Patent Document 2), a waterproof sheet containing as a maj or component a mixture of two or more kinds of ethylene-vinyl acetate copolymers different from each other in vinyl acetate content (see Patent Document 3), and the like.

However, the conventional waterproof sheets disclosed in Patent Documents 1 to 3 are inferior in adhesion property and contact property to a concrete structure built in the tunnel, and therefore, such a problem may occur with the lapse of time from the provision of the waterproof sheet that water seeping from the earth or the ground runs along the gap between the waterproof sheet and the concrete structure through an adhesion failure part or a broken part of the waterproof sheet, and flows into the concrete structure through cracks of the concrete structure, thereby causing leakage of water.

For solving the problem in the conventional waterproof sheet to provide a waterproof sheet excellent in adhesion property with concrete, the inventors have developed and filed as an application a water-shielding sheet for civil engineering work having a surface containing an ethylene-vinyl acetate copolymer composition containing an ethylene-vinyl acetate copolymer (A) having a vinyl acetate content of from 80 to 99% by mass and an ethylene-vinyl acetate copolymer (B) having a vinyl acetate content of from 50 to 70% by mass at a mass ratio (A)/ (B) of from 0.2 to 5 (see Patent Document 4) .

The water-shielding sheet developed by the inventors disclosed in Patent Document 4 is excellent in adhesion property with a hydraulic material, such as concrete, is hard to be peeled off from a hydraulic material, and is excellent in water-shielding effect, as compared to the conventional waterproof sheets, such as those disclosed in Patent Documents 1 to 3. The inventors have made extensive investigations based on the water-shielding sheet of Patent Document 4. It has been thus found that for preventing further effectively water seeping from the earth or the ground from invading a concrete tunnel structure, it is necessary that the adhesion property of the waterproof sheet to the concrete structure is further enhanced.

It has also found that as the waterproof sheet for a tunnel, a waterproof sheet used in a mountain tunnel method and a shield tunneling method and a waterproof sheet used in a cut and cover tunneling method are necessarily different from each other in tensile breaking elongation, tensile breaking strength and the like, owing to differences in stress applied to the waterproof sheet, construction techniques of the waterproof sheet, and the like.

[Patent Document 1] JP-A-7-329228
[Patent Document 2] JP-A-9-52330
[Patent Document 3] JP-A-2001-115791
[Patent Document 4] JP-A-2002-294015 Patent document US 2005/0106967 A1 discloses a waterproof sheet comprising a base sheet containing a synthetic resin having on a surface thereof a silica-containing surface layer.

[Disclosure of the Invention]

An object of the present invention is to provide a waterproof sheet for a tunnel that is integrated through adhesion with a concrete tunnel structure, whereby no gap is formed between the sheet and the concrete structure even when a prolonged period of time is elapsed from the installation, or the installed surface suffers large deterioration in evenness or levelness, ground subsidence or earthquake, and also problems including breakage and the like do not occur upon installation and after installation in the tunnel, thereby preventing smoothly water seeping from the earth or the ground from leaking into the tunnel.

The inventors have made various studies for attaining the object, and as a result, such a method of producing a waterproof sheet for a tunnel is provided such that a waterproof sheet for a tunnel can be produced that has a prescribed tensile breaking strength and a prescribed tensile breaking elongation for a waterproof sheet for a tunnel used in a mountain tunnel method and a shield tunneling method and a waterproof sheet for a tunnel used in a cut and cover tunneling method, and furthermore can be integrated with a hydraulic material, such as concrete and mortar, through firm adhesion.

The waterproof sheet for a tunnel has been developed based on the knowledge found by the inventors, i.e., when a silica-containing surface layer containing silica having a silicon dioxide content of 90% by mass or more in a specific concentration or higher is provided as a surface layer of a waterproof sheet over a specific depth or deeper, the silica contained in the silica-containing surface layer positioned at the surface part of the waterproof sheet is reacted and integrated with a component in cement in the process of hydraulic reaction of concrete, thereby being firmly adhered and integrated.

The inventors have also found, at this time, that the content ratio of silica in the silica-containing surface layer is preferably from 30 to 200 mg/cm$^3$; the silica-containing surface layer preferably has a depth of from 5 to 30 $\mu$m; adhesion and integration with concrete are improved when the silica present in the silica-containing surface layer has a BET specific surface area of 80 m$^2$/g or more; the synthetic resin forming the waterproof sheet for a tunnel is preferably an ethylene-vinyl acetate copolymer or a composition thereof; the silica-containing surface layer is preferably formed with an ethylene-vinyl acetate copolymer having a content ratio of a structural unit derived from vinyl acetate of 30% by mass or more; the silica-containing surface layer can be smoothly formed by coating on a surface of a base sheet a liquid containing silica dispersed in an organic solvent capable of dissolving the surface of the base sheet, followed by drying under heating; and the like, and the present invention has been completed based on the variation of knowledge.

Accordingly, the present invention provides a method of producing a waterproof sheet for a tunnel according to claim 1 and a use of the waterproof sheet obtained by this method in building a tunnel according to claim 3.

[Brief Description of the Drawings]

[Fig. 1] The figure is a diagram showing a measurement method of a mortar adhesion strength of a waterproof sheet.
[Fig. 2] The figure is a schematic diagram showing a tunnel structure having a waterproof sheet installed therein.
[Fig. 3] The figures are (a) a schematic diagram showing a cross section of a waterproof sheet obtained in Example 1, and (b) a schematic diagram showing a cross section of a waterproof sheet obtained in Comparative Example 2.
[Fig. 4] The figure is an electron micrograph of a cross section of a waterproof sheet (I) obtained in Example 1 (a part of a base material layer A and a silica-containing surface layer).
[Fig. 5] The figures are explanatory diagrams including (a) a side view and (b) a plane view of a specimen for measuring watertightness of a waterproof sheet.
[Fig. 6] The figure is an explanatory diagram showing an apparatus for measuring watertightness on deterioration in evenness or levelness.
[Fig. 7] The figures are (a) a structural explanatory diagram showing a waterproof sheet obtained in Example 4, and (b) a structural explanatory diagram showing a waterproof sheet obtained in Comparative Example 10.
[Fig. 8] The figures are (a) an electron micrograph of a cross section of a silica-containing surface layer of a waterproof sheet of Example 4, and (b) an electron micrograph of an upper surface of the silica-containing surface layer.
[Fig. 9] The figure is an explanatory diagram of a cut tunnel.

[Description of the Reference Numerals and Signs]

| | |
|---|---|
| 1 | waterproof sheet (I) |
| 2 | covering concrete |
| 3 | rock bolt |
| 10 | waterproof sheet specimen |
| 20 | mortar column |

30    hole
40    pedestal
50    porous stone
60    ceramic ball
70    circular water bath
80    water
90    air pipe
100   metering pipette
110   silica-containing surface layer
120   base material layer A
130   base material layer B
140   base cloth
200   waterproof sheet of Example 4
300   waterproof sheet of Comparative Example 10

[Best Mode for carrying out the Invention]

The present invention will be described in detail below. According to the inventive method, the waterproof sheet for a tunnel is a waterproof sheet formed with a synthetic resin having a silica-containing surface layer, which contains silica having a silicon dioxide content of 90% by mass or more in a ratio (concentration) of from 30 to 200 mg/cm$^3$, over a depth of from 5 to 30 $\mu$m from the surface, and has a tensile breaking strength of 10 MPa or more and a mortar adhesion strength of 15 N/cm or more.

The surface layer of a depth of from 5 to 30 $\mu$m from the surface contains silica having a silicon dioxide content of 90% by mass or more in a ratio (concentration) of from 30 to 200 mg/cm$^3$, whereby upon providing a cement material for forming concrete on the silica-containing surface layer of the waterproof sheet, the calcium component in the cement is reacted with the silica having a silicon dioxide content of 90% by mass or more in the silica-containing surface layer through the process of hydraulic reaction thereof to form tough tobermorite, thereby integrating the waterproof sheet and concrete firmly and completely.

The content (concentration) of the silica having a silicon dioxide content of 90% by mass or more (which may be, hereinafter, referred to as "silica (SiO$_2$ ≥ 90%)") in the silica-containing surface layer of the waterproof sheet is preferably from 30 to 200 mg/cm$^3$ as described above, and is more preferably from 40 to 100 mg/cm$^3$, and further preferably from 45 to 80 mg/cm$^3$.

In the case where the content (concentration) of the silica (SiO$_2$ ≥ 90%) in the silica-containing surface layer is less than 30 mg/cm$^3$, it becomes difficult to provide a waterproof sheet having a mortar adhesion strength of 15 N/cm or more. In the case where the content (concentration) of the silica (SiO$_2$ ≥ 90%) in the silica-containing surface layer is too large, decrease in mortar adhesion strength of the waterproof sheet, cracking on the surface of the sheet, and the like may occur due to decrease in strength of the silica-containing surface layer itself, decrease in bonding strength between the silica-containing surface layer and the underlying layer, formation of cracking in the silica-containing surface layer, and the like.

The thickness (i.e., the depth from the surface) of the silica-containing surface layer containing silica (SiO$_2$ ≥ 90%) in a concentration of from 30 to 200 mg/cm$^3$ is preferably from 5 to 30 $\mu$m as described above, and is more preferably from 6 to 20 $\mu$m, and further preferably from 7 to 18 $\mu$m.

In the case where the thickness (i.e., the depth from the surface) of the silica-containing surface layer containing silica (SiO$_2$ ≥ 90%) in a concentration of from 30 to 200 mg/cm$^3$ is less than 5 $\mu$m, it becomes difficult to provide a waterproof sheet having a mortar adhesion strength of 15 N/cm or more. In the case where the thickness (i.e., the depth from the surface) of the silica-containing surface layer containing silica (SiO$_2$ ≥ 90%) in a concentration of from 30 to 200 mg/cm$^3$ is too large, cracking in the silica-containing surface layer is liable to occur.

In general, silica contains, in addition to silicon dioxide as a major component, auxiliary components, such as aluminum oxide, iron oxide and graphite, and since the auxiliary components do not have a capability of undergoing reaction with cement for bonding, a mortar adhesion strength that is necessary in the present invention cannot be obtained when the auxiliary components are contained in the silica in an amount of 10% by mass or more. For example, a silicon-based mineral containing graphite, which is referred to as silica black or black silica, is laid under floor of a house by utilizing the deodorizing, antimicrobial and dehumidification functions thereof, but the silicon dioxide content thereof is about 80% by mass, and a waterproof sheet having a mortar adhesion strength of 15 N/cm or more cannot be obtained when the material is contained in the surface layer part of the waterproof sheet.

The silica contained in the silica-containing surface layer of the waterproof sheet preferably has a higher purity, and in consideration thereof, silica having a silicon dioxide content of 92% by mass or more, and particularly 95% by mass or more, is preferably used.

According to the inventive method, the waterproof sheet for a tunnel has a mortar adhesion strength of 15 N/cm or more. The waterproof sheet for a tunnel of the present invention preferably has a mortar adhesion strength of 17 N/cm or more, and further preferably 18 N/cm or more. The upper limit of the mortar adhesion strength is not particularly limited and is preferably 30 N/cm or less from the standpoint of production cost. According to the inventive method, the waterproof sheet for a tunnel has a mortar adhesion strength of 15 N/cm or more, and is thereby adhered firmly with the whole area of a concrete structure built on the waterproof sheet to prevent formation of a gap between the waterproof sheet and the concrete structure, which becomes a flow path of water seeping from the earth or the ground, and accordingly, favorable waterproof property is exhibited for a prolonged period of time.

In the case where the mortar adhesion strength of the waterproof sheet for a tunnel is less than 15 N/cm, a gap is formed between the waterproof sheet and the concrete structure due to water pressure of water seeping from the earth or the ground, whereby water is liable to invade the interior of the concrete structure.

The "mortar adhesion strength" of the waterproof sheet obtained by the method of the present invention referred in the present specification is an average peeling strength (N) per 1 cm of the waterproof sheet upon peeling the waterproof sheet from one end at an angle of 180° and a speed of 10 mm/min by 2 cm off from a cured product of a mortar liquid, which is prepared by mixing 100 parts by mass of Portland cement, 200 parts by mass of standard sand and 50 parts by mass of water, and is then cast to a thickness (depth) of 4 cm on the concrete adhesion surface of the waterproof sheet cut into a prescribed dimension, followed by curing in a sealed state at 20°C for 28 days. The details of the measurement method of the "mortar adhesion strength" are as described in the chapter of Examples later.

The waterproof sheet for a tunnel obtained by the method of the present invention necessarily has a tensile breaking strength of 10 MPa or more from the standpoint of the mechanical strength required on installation and use with concrete integrated therewith.

In the method of producing a waterproof sheet for a tunnel of the present invention, a waterproof sheet for a tunnel used in a mountain tunnel method and a shield tunneling method (which may be hereinafter referred to as a "waterproof sheet (I)") is produced with a synthetic resin and has a tensile breaking strength of 10 MPa or more and a tensile breaking elongation of 300% or more.

The waterproof sheet (I) for a tunnel obtained by the method of the present invention preferably has a tensile breaking strength of 15 MPa or more, and more preferably 18 MPa or more. The waterproof sheet (1) for a tunnel obtained by the method of the present invention preferably has a tensile breaking elongation of 500% or more, and more preferably 750% or more.

Although the upper limits of the tensile breaking strength and the tensile breaking elongation of the waterproof sheet (I) for a tunnel obtained by the method of the present invention are not particularly limited, the tensile breaking strength is preferably 50 MPa or less from the standpoint of cost of the resin, and the tensile breaking elongation is preferably 1,000% or less from the standpoint of installation property.

The "tensile breaking strength" and the "tensile breaking elongation" of the waterproof sheet (I) in the present specification mean the tensile breaking strength (tensile strength) and the tensile breaking elongation (tensile distortion), respectively, that are measured according to JIS K6773.

Upon building a tunnel using the waterproof sheet (I) for a tunnel obtained by the method of the present invention, such a method is generally employed that the waterproof sheet (I) is laid on the earth or the ground of the tunnel including a primary covered surface formed in a mountain area or underground of an urban area, and materials for forming a concrete structure are cast on the waterproof sheet (I). In particular, the waterproof sheet (I) for a tunnel obtained by the method of the present invention is preferably used in a tunnel built by an urban NATM method, and particularly in a tunnel improved in airtightness and water-shielding property, which is referred to as a watertight tunnel, and in this case, the waterproof sheet is laid over 360° around the tunnel to provide a structure for preventing invasion of groundwater outside the tunnel.

In the aforementioned construction methods, when a waterproof sheet is laid on the earth or the ground of a tunnel including a primary covered surface, and a concrete structure, which is to be a main body of the tunnel, is cast inside the waterproof sheet, it is necessary to prevent such problems from occurring that the waterproof sheet is broken due to the pressure of the cast concrete or due to stress locally applied to the waterproof sheet stretched on a concave part of the ground.

The waterproof sheet (I) obtained by the method of the present invention has a high tensile breaking strength of 10 MPa or more and a high tensile breaking elongation of 300% or more, and thus is not broken with the pressure of cast concrete upon construction, and is not broken even when stress is applied locally to the waterproof sheet stretched on a concave part of the ground. Furthermore, the waterproof sheet (I) obtained by the method of the present invention has a high tensile breaking strength and a high tensile breaking elongation as described above, and therefore, the waterproof sheet may not be broken upon application of stress thereto after construction of the tunnel, thereby maintaining favorable waterproof capability for a prolonged period of time.

Not only in the case where the waterproof sheet (I) does not satisfy both the requirements, i.e., a tensile breaking strength of 10 MPa or more and a tensile breaking elongation of 300% or more, but also in the case where one of the requirements is not satisfied, the waterproof sheet is liable to suffer such a problem as breakage due to pressure applied to the waterproof sheet upon casting concrete or local stress applied thereto on a concave part upon construction of a tunnel or due to stress applied to the waterproof sheet after construction of the tunnel.

The thickness of the waterproof sheet (I) obtained by the method of the present invention is not particularly limited and is preferably 1.5 mm or more, and more preferably 2 mm or more, for maintaining sufficient water-shielding property when the waterproof sheet is elongated by 300% or more. The thickness is preferably 5 mm or less since a waterproof sheet having too large a thickness is inferior in handleability upon construction and installation property.

The waterproof sheet (I) obtained by the method of the present invention may have depending on necessity a cloth layer, such as a woven or knitted fabric or a nonwoven fabric, inside the waterproof sheet or on another surface (i.e., the surface opposite to the silica-containing surface layer), but the waterproof sheet obtained by the method of the present invention may often not be obtained when the cloth layer is provided since the tensile breaking elongation of the waterproof sheet is liable to be less than 300%. In the case where the tensile breaking elongation of the waterproof sheet is less than 300%, the waterproof sheet is liable to suffer such a problem as breakage due to pressure applied to the waterproof sheet upon casting concrete or local stress applied thereto on a concave part upon construction of a tunnel or due to stress applied to the waterproof sheet after construction of the tunnel, which may bring about leakage of water into the tunnel.

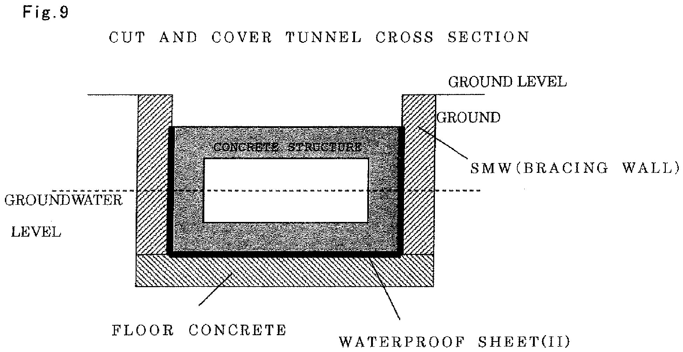

In the use of the waterproof sheet for a tunnel obtained by the method of the present invention, a waterproof sheet for a tunnel used in a cut and cover tunneling method (which may be hereinafter referred to as a "waterproof sheet (II)") is used mainly in a cut and cover tunneling method in an urban area. As shown in Fig. 9, a cut tunnel in an urban area (the concrete structure shown in Fig. 9) has such a structure that a waterproof sheet is laid on the bottom part and the side part positioned under the groundwater level, and depending on necessity on the ceiling part, to prevent groundwater from invading from the ground, and the waterproof sheet used herein necessarily has a strength capable of withstanding the cast pressure of concrete, an elongation capable of following deterioration in evenness or levelness of the ground including an underground continuous bracing wall, such as a soil mortar wall (which is hereinafter referred to as "SMW") , and a tear strength capable of preventing the waterproof sheet from being broken upon bumping against a protrusion, such as a steel beam, protruded from a wall in an inverted lining method or the like. It is necessary accordingly that the tensile breaking strength is 20 MPa or more, the tensile breaking elongation is from 10 to 50%, and the tear strength is 50 N or more. In the case where a waterproof sheet has a tensile breaking strength or 20 MPa or more, a tensile breaking elongation of from 10 to 50% and a tear strength of 50 N or more, such problems may not occur that upon casting a concrete structure, which is to be a main body of the tunnel, inside the waterproof sheet, the sheet is broken due to pressure of cast concrete, is broken due to stress applied locally to the sheet stretched on a concave part of the ground, is torn by bumping against an underground protrusion or the like on a part thinned by stretching.

The thickness of the sheet is not particularly limited, and is preferably 0.5 mm or more, and more preferably 1 mm or more, from the standpoint of maintaining sufficient water-shielding property without tearing upon bumping against an underground protrusion. The thickness is preferably 3 mm or less since too large a thickness brings about a problem on installation property.

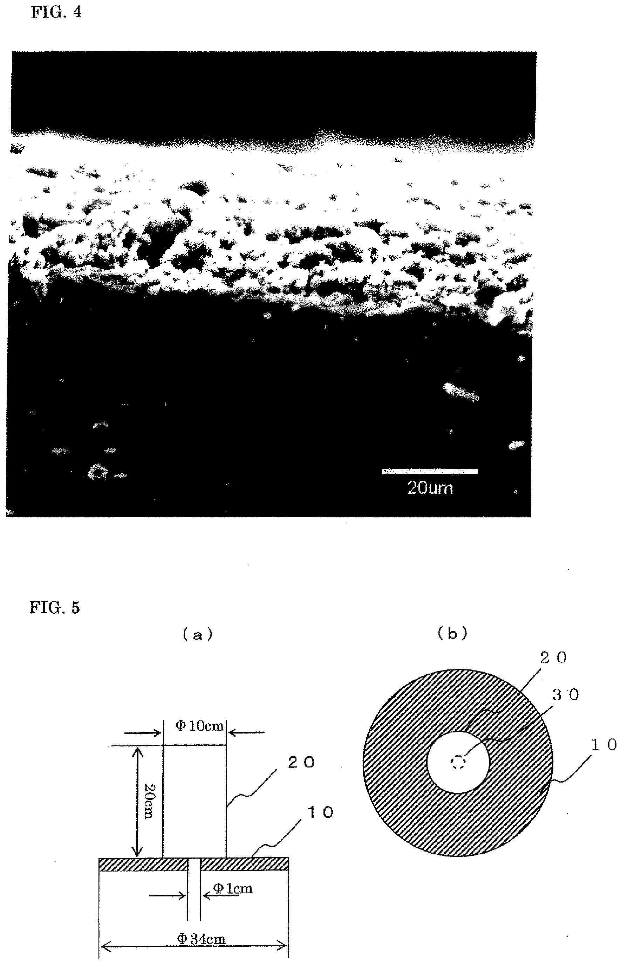

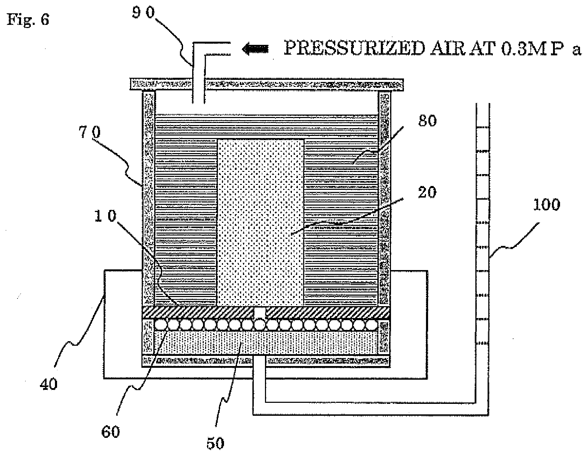

The waterproof sheet (II) for a tunnel obtained by the method of the present invention exhibits waterproof property through firm adhesion between the whole surfaces of the waterproof sheet attached to the ground including an underground continuous bracing wall, such as SMW, and the concrete structure build inside the waterproof sheet. The waterproof property thereof is expressed by watertightness on deterioration in evenness or levelness. The watertightness on deterioration in evenness or levelness of the waterproof sheet is necessarily 10 mL/day, which is expressed by a water leakage amount measured in such a manner that as shown in Fig. 5, on the center of a specimen 10 of the waterproof sheet cut into a diameter of 34 cm, a mortar column 20 having a diameter of 10 cm is formed (which will be described in detail later) to produce a waterproof sheet specimen, and the water leakage amount is measured with an apparatus for measuring watertightness on deterioration in evenness or levelness (which will be described in detail later) shown in Fig. 6. In the case where the watertightness on deterioration in evenness or levelness exceeds 10 mL/day, water may invade the adhesion interface between the waterproof sheet and the concrete structure due to water pressure, thereby leaking inside.

The method of producing waterproof sheet (II) for a tunnel of the present invention is limited in production method according to claim 1. In general, non-inventive examples thereof include a method of melt-extruding into a sheet form through a T-die and a method of forming into a sheet form with a calender roll. The waterproof sheet may contain, in addition to the major synthetic resin, an inorganic filler, such as calcium carbonate, a pigment, a flame retardant, a plasticizer and the like. The waterproof sheet is preferably reinforced with fibers for providing the necessary mechanical strength. The reinforcing fibers used may be a base cloth, such as a woven fabric, a nonwoven fabric, a knitted fabric, a mesh body or a mesh sheet, which is produced by using one or plural kinds of synthetic fibers, such as polyester fibers, polyamide fibers, aramid fibers, polyolefin fibers, polyvinyl alcohol fibers, acrylic fibers and polypropylene fibers, a semi-synthetic fibers (artificial fibers), such as viscose fibers, cupra fibers and acetate fibers, natural fibers, such as cotton, hemp and wool, and inorganic fibers, such as glass fibers and carbon fibers, and in particular, the waterproof sheet preferably contains a base cloth containing a woven fabric, knitted fabric, a nonwoven fabric, a mesh sheet or the like, which is produced by using at least one kind of polyester fibers, polyamide fibers, polypropylene fibers, polyvinyl alcohol fibers and the like.

The waterproof sheet (II) for a tunnel obtained by the method of the present invention may have on the back surface thereof depending on necessity a drain layer for draining water smoothly. Examples of the drain layer that is preferably employed include a fibrous cloth, such as a woven fabric, a knitted fabric and a nonwoven fabric, owing to the large draining effect thereof.

The waterproof capability of the resulting waterproof sheet (II) for a tunnel can be measured and evaluated with a watertightness testing apparatus. This is a method for measuring watertightness of an adhesive waterproof sheet described in "Tetsudo Kozobutu tou Sekkei Hyojun, dou Kaisetu (Kaisaku Tunnel)" [ Standard Design of Railroad Structures and Explications thereof (Cut Tunnel), edited by Railway Technical Research Institute, published by Maruzen Co., Ltd. on March 30, Heisei 13 (2001) ] , in which pressurized water is impregnated the interface between mortar or concrete post-cast on the sheet and the waterproof sheet, and the amount of water passing is measured.

In the basic watertightness test, a waterproof sheet is measured in a flat state, but since SMW in a practical field suffers deterioration in evenness or levelness, a watertightness test on deterioration in evenness or levelness, which is conducted with ceramic balls (diameter: 10 mm) spread under the waterproof sheet, is employed as a practical measurement method.

It has been said that sufficient waterproof capability is ensured with a water leakage amount of 10 mL/day or less measured in the test, and the waterproof capability of the waterproof sheet (II) obtained by the method of the present invention is determined as passed when the water leakage amount is 10 mL/day or less in the watertightness test on deterioration in evenness or levelness, and is determined as failed when the water leakage amount exceeds 10 mL/day.

The silica contained in the silica-containing surface layer of the waterproof sheet preferably has a BET specific surface area of 80 $m^2$/g or more, and more preferably 90 $m^2$/g or more. In the case where the BET specific surface area of the silica is less than 80 $m^2$/g, the contact area between the silica and concrete and reaction sites between them may be decreased upon installing raw materials for concrete on the silica-containing surface layer of the waterproof sheet to fail to provide a sufficient adhesion strength. It has been known that a BET specific surface area is proportional to a primary particle diameter of particles, and a BET specific surface area of 80 $m^2$/g or more is generally equivalent to a primary particle diameter of 40 nm or less.

Examples of the production method of silica include a wet method, a dry method and an arc method, and in the present invention, silica having a silicon dioxide content of 90% by mass or more produced by a wet method is preferably used from the standpoint of balance between aggregating property and water adsorbing property of particles. The wet method includes a precipitation method and a gelation method, and silica having a silicon dioxide content of 90% by mass or more produced by a precipitation method is preferably used since the number of silanol groups forming tobermorite through reaction with concrete is larger in silica obtained by a precipitation method than silica obtained by a gelation method. It has been said that the number of silanol groups is generally about 8 per cubic nanometer in silica obtained by a precipitation method and about 5 per cubic nanometer in silica obtained by a gelation method.

A resin constituting the silica-containing surface layer in the waterproof sheet obtained by the method of the present invention is preferably an ethylene-vinyl acetate copolymer having a content ratio of a structural unit derived from vinyl acetate (which is hereinafter referred to as a "vinyl acetate unit") of 30% by mass or more, more preferably an ethylene-vinyl acetate copolymer having a content ratio of a vinyl acetate unit of 32% by mass or more, and further preferably an ethylene-vinyl acetate copolymer having a content ratio of a vinyl acetate unit of from 32 to 40% by mass.

The ethylene-vinyl acetate copolymer containing a vinyl acetate unit in a ratio of 30% by mass or more is excellent in contact property with concrete and is suitable as a resin used in a waterproof sheet for a tunnel. An ethylene-vinyl acetate copolymer having a content ratio of a vinyl acetate unit of 30% by mass or more, further 32% by mass or more, and particularly from 32 to 40% by mass, is excellent in dissolution property in an organic solvent, and in the case where the silica-containing surface layer is formed on a waterproof sheet by coating a silica dispersion liquid containing silica dispersed in an organic solvent or a silica dispersion liquid containing silica dispersed in an organic solvent with a thickener added thereto on a base sheet constituting the waterproof sheet, followed by drying under heating, the surface layer part of the base sheet is swollen and/or dissolved with the organic solvent used in the silica dispersion liquid upon forming the silica-containing surface layer on the waterproof sheet, and the swollen and/or dissolved surface layer part of the base sheet is dried under heating in a state where silica is uniformly dispersed and attached thereto. As a result, silica is dispersed uniformly over the outermost surface of the surface layer part containing the ethylene-vinyl acetate copolymer to the interior thereof, and the silica-containing surface layer firmly retained in the resin constituting the surface layer part is formed on the base sheet. In the case where a polymer capable of being dissolved in the organic solvent constituting the silica dispersion liquid is used as the thickener, the polymer is also accumulated on and attached to the surface layer part of the base sheet after drying under heating, and thus the silica is retained in the silica-containing surface layer further firmly.

Even in the case where a sheet formed of an ethylene-vinyl acetate copolymer is used as the base sheet, the surface layer part of the base sheet is lowly swollen with the organic solvent when the content ratio of a vinyl acetate unit is less than 30% by mass in the ethylene-vinyl acetate copolymer, which may fail to provide a silica-containing surface layer having silica uniformly dispersed over the outermost surface to the interior and retained firmly in the resin in the surface layer part.

The synthetic resin constituting the sheet main body (base sheet) positioned at the lower part of the silica-containing surface layer in the method of producing a waterproof sheet of the present invention is an ethylene-vinyl acetate copolymer. Further non-inventive examples include: polyvinyl chloride, ECB (ethylene copolymer bitumen), thermoplastic polyurethane and an olefin polymer. The inventive method foresees that the sheet main body (base sheet) positioned at the lower part of the silica-containing surface layer is formed with an ethylene-vinyl acetate copolymer having high affinity with the ethylene-vinyl acetate copolymer constituting the silica-containing surface layer. An ethylene-vinyl acetate copolymer is suitable as a synthetic resin constituting the waterproof sheet (I) having a tensile breaking strength of 10 MPa or more and a tensile breaking elongation of 300% or more used in a mountain tunnel method and a shield tunneling method since it is large in tensile strength, tear strength and the like, has a large elongation, can be easily molded by extrusion molding or with a calender roll, is excellent in resistance to chemicals, and can be controlled in property of the polymer by changing the copolymerization ratio of a vinyl acetate unit.

The ethylene-vinyl acetate copolymer constituting the sheet main body of the waterproof sheet is preferably an ethylene-vinyl acetate copolymer having a content ratio of a vinyl acetate unit of from 5 to 50% by mass, further from 7 to 30% by mass, and particularly from 10 to 20% by mass, from the standpoint of maintenance of properties at a low temperature.

The synthetic resin constituting the sheet main body of the waterproof sheet obtained by the method of the present invention may contain depending on necessity one or plural kinds of an inorganic filler, such as calcium carbonate, a pigment, a flame retardant, a plasticizer and the like.

The method of producing a waterproof sheet of the present invention comprises:

(A) a method, in which a silica dispersion liquid ($a_1$) containing silica having a content of silicon dioxide of 90% by mass ($SiO_2 \geq 90\%$) dispersed in an organic solvent exhibiting dissolution action on the synthetic resin constituting the base sheet or a silica dispersion liquid ($a_2$) containing the silica dispersion liquid ($a_1$) having further contained therein a thickener having affinity with the synthetic resin constituting the base sheet is coated on the surface of the base sheet formed with the synthetic resin, followed by drying under heating, to produce a waterproof sheet containing the base sheet having formed thereon a silica-containing surface layer containing silica ($SiO_2 \geq 90\%$).

A further example not falling under the invention according to claim 1 comprises:

(B) a method, in which a synthetic resin ($b_1$) for the surface layer containing silica ($SiO_2 \geq 90\%$) and a synthetic resin ($b_2$) for forming the sheet main body are molded by co-extrusion or co-calendering to produce a waterproof sheet containing a sheet main body containing no silica having formed thereon a layer containing silica ($SiO_2 \geq 90\%$) as a surface layer.

Among these, the production method (A) is preferably employed since the silica ($SiO_2 \geq 90\%$) can be localized in the surface layer part of the sheet in a prescribed high concentration (preferably in a concentration of from 30 to 200 mg/cm$^3$) uniformly, firmly and reliably.

In the case of the production method (B), it is necessary to add silica ($SiO_2 \geq 90\%$) in a large amount to the synthetic resin ($b_1$) for the surface layer, which may bring about deterioration in processability upon producing the waterproof sheet.

According to the inventive method of producing a waterproof sheet by the production method (A), the content of silica in the silica dispersion liquid ($a_1$) or ($a_2$) is preferably from 1 to 20% by mass, and more preferably from 2 to 10% by mass, based on the mass of the silica dispersion liquid ($a_1$) or ($a_2$) from the standpoint of shelf stability of the liquid.

Upon producing the waterproof sheet according to the present invention by employing the production method (A), the silica-containing surface layer is formed by using the silica dispersion liquid ($a_2$) containing the silica dispersion liquid ($a_1$) having further contained therein a thickener, whereby the silica ($SiO_2 \geq 90\%$) can be suppressed from being dropped off from the silica-containing surface layer to provide a waterproof sheet having a larger mortar adhesion strength. According to the invention the base sheet is formed with an ethylene-vinyl acetate copolymer having a content ratio of a vinyl acetate unit of 30% by mass or more and the thickener used is an ethylene-vinyl acetate copolymer having a content ratio of a vinyl acetate unit of from 30 to 90% by mass, and particularly from 30 to 70% by mass, from the standpoint of affinity with the ethylene-vinyl acetate copolymer constituting the base sheet. The addition amount of the thickener in the silica dispersion liquid ($a_2$) is preferably 20% by mass or less, and more preferably from 2 to 10% by mass, based on the mass of the organic solvent constituting the silica dispersion liquid ($a_2$) . In the case where the addition amount of the thickener is too large, the swelling function of the silica dispersion liquid (a2) on the surface of the base sheet is lowered, and it is difficult to attach and contain silica ($SiO_2 \geq 90\%$) firmly in the surface layer part.

As the organic solvent used for preparing the silica dispersion liquid ($a_1$) or the silica dispersion liquid ($a_2$) for forming the silica-containing surface layer on the base sheet formed with a synthetic resin, toluene, xylene, ethyl acetate, tetrahydrofuran, methyl ethyl ketone and the like may be used in the case where the base sheet is formed with an ethylene-vinyl acetate copolymer having a content ratio of a vinyl acetate unit of 30% by mass or more.

In the case where an aqueous silica dispersion liquid containing silica dispersed in water or an aqueous silica dispersion liquid further having a thickening polymer added thereto is coated on the base sheet, followed by drying under heating, instead of the silica dispersion liquid containing silica dispersed in an organic solvent exhibiting dissolution action on the synthetic resin constituting the base sheet, silica may not be firmly retained in the surface layer part of the base sheet, and it is difficult to provide a waterproof sheet having a mortar adhesion strength of 15 N/cm or more.

The coating amount of the silica dispersion liquid ($a_1$) or the silica dispersion liquid ($a_2$) for forming the silica-containing surface layer on the base sheet formed with a synthetic resin is generally preferably about from 2 to 50 g/m$^2$, and particularly about from 5 to 30 g/m$^2$, from the standpoint of workability and strength of the silica-containing surface layer.

The drying temperature after coating the silica dispersion liquid ($a_1$) or the silica dispersion liquid ($a_2$) is generally preferably a temperature within a range of from the boiling point of the organic solvent to (the boiling point + 20°C) from the standpoint of firm adhesion and inclusion of silica ($SiO_2 \geq 90\%$) in the surface layer part and prevention of heat degradation.

According to the inventive method, the waterproof sheet for a tunnel having a silica-containing surface layer containing silica having a silicon dioxide content of 90% by mass or more in a ratio of from 30 to 200 mg/cm$^3$ formed over a depth of from 5 to 30 $\mu$m from the surface of the waterproof sheet, and having a tensile breaking strength of 10 MPa or more and a tensile breaking elongation of 300 % or more and a mortar adhesion strength of 15 N/cm or more can be smoothly produced.

Upon performing waterproof construction by using the waterproof sheet obtained by the method of the present invention, the construction may be performed by using one sheet of the waterproof sheet or by using plural sheets of the waterproof sheet depending on the contents of the construction. In the case where the construction is performed by using plural sheets of the waterproof sheet, the ends of the waterproof sheets of the present invention may be bonded to each other, or the end of the waterproof sheet of the present invention may be bonded to an end of another sheet. The ends may be bonded, for example, by a heat-fusion method by high frequency dielectric heating, high frequency induction heating or the like, a method using an adhesive, and the like.

The waterproof sheet for a tunnel obtained by the method of the present invention is firmly adhered to and integrated with a tunnel structure formed with concrete, whereby no gap is formed between the waterproof sheet and the concrete structure even after lapsing a prolonged period of time from construction, and thus water seeping from the earth or the ground can be completely shielded to prevent smoothly the seeping water from invading the interior of the concrete structure.

The waterproof sheet obtained by the method of the present invention has a prescribed tensile breaking strength and a prescribed tensile breaking elongation, whereby no problem including breakage and the like occurs even when stress is applied to the waterproof sheet upon installation or after installation of the waterproof sheet, and thus the excellent waterproof effect can be maintained for a prolonged period of time.

[Example]

The present invention will be described more specifically with reference to examples and the like, but the present invention is not limited to the following examples.

In the examples, measurements of the content of silicon dioxide in silica, the BET specific surface area of silica, the tensile breaking strength and the tensile breaking elongation of the waterproof sheet, the thickness of the silica-containing surface layer in the waterproof sheet, the content ratio of silica in the silica-containing surface layer, and the mortar adhesion strength of the waterproof sheet, and determination of the presence of water leakage in a tunnel were carried out in the following manners. The waterproof sheet (I) and the waterproof sheet (II) were determined by separate methods in some of the items.

(1) Content of Silicon Dioxide in Silica

The content of silicon dioxide ($SiO_2$) in silica was obtained by the following expression (i):

$$\text{Content of } SiO_2 \text{ (\% by mass)} = 99.80 \text{ (\% by mass)} - (C_A +$$

$$C_B + C_C + D) \qquad\qquad (i)$$

(In the expression, $C_A$ represents the content (% by mass) of $Al_2O_3$, $C_B$ represents the content (% by mass) of $Fe_2O_3$, $C_c$ represents the content (% by mass) of $Na_2O$, and D represents the weight reduction rate (% by mass) of silica after heating silica at 105°C for 2 hours and further heating at 1,000°C for 1 hour, based on the mass of silica before heating. The contents of $Al_2O_3$, $Fe_2O_3$ and $Na_2O$ in silica were measured with a fluorescent X-ray. In the expression (i), the reason why the fixed value for obtaining the content of $SiO_2$ is 99.80% by mass but is not 100% by mass is that silica contains 0.20% by mass of slight amounts of impurities ($TiO_2$, CaO, MgO and $SO_4$), and thus the value obtained by subtracting the contents of the slight amount of impurities is employed as the fixed value.)

(2) BET Specific Surface Area of Silica

The BET specific surface area of silica was measured according to the BET method with an automatic specific surface area measuring apparatus "GEMINI 2375", produced by Shimadzu Corporation.

(3) Tensile Breaking Strength and Tensile Breaking Elongation of Waterproof Sheet (I)

The tensile breaking strength and the tensile breaking elongation of the waterproof sheet (I) was measured according to JIS K6773.
Specifically, the tensile breaking strength of the waterproof sheet was measured according to the method disclosed in Section 7 of JIS K6773 with a testing machine, Instron 5566, under conditions of a temperature of 20°C and a humidity of 65% (RH).
The tensile breaking elongation of the waterproof sheet was measured according to the method disclosed in Section 7.6 of JIS K6773 with a testing machine, Instron 5566, under conditions of a temperature of 20°C and a humidity of 65% (RH) .

(4) Tensile Breaking Strength, Tensile Breaking Elongation and Tear Strength of Waterproof Sheet (II)

The tensile breaking strength, the tensile breaking elongation and the tear strength of the waterproof sheet (II) were measured according to JIS L1096 with a measurement machine, Model 5566, produced by Instron Japan, Co., Ltd., in an environment at a temperature of 20°C and a humidity of 65% (RH) . The tensile breaking strength was obtained by dividing the actual tensile strength at break by the cross sectional area of the sample.

(5) Thickness of Silica-containing Surface Layer in Waterproof Sheet

The waterproof sheet obtained in Examples or Comparative Examples below was cut with a microtome, and the cut surface was photographed with an electron microscope (magnitude: 1,000) at three sites with an interval of 50 cm (length of area photographed in each site: 0.1 mm). The thickness (depth) of the silica-containing surface layer was measured for each photographed site, and an average value of the three sites was designated as the thickness of the silica-containing surface layer.

(6) Content Ratio of Silica in Silica-containing Surface Layer of Waterproof Sheet

A test specimen having a dimension of 3 cm in length $\times$ 3 cm in width was cut out from the waterproof sheet having been photographed with an electron microscope in the item (5), and the test specimen was heated in a crucible to 800°C with an electric furnace to vaporize organic substance completely. Hydrochloric acid and ammonium molybdate were added to the remaining ash content for coloration, and the content of silica contained in the test specimen was measured by checking with the calibration curve having been prepared with samples having known concentrations (molybdenum blue method). The content ratio of silica in the silica-containing surface layer of the waterproof sheet was obtained by the expression (ii). There were cases where silica was contained in the part under the silica-containing surface layer, but since the amount thereof was slight, it was handled that silica contained in the part under the silica-containing surface layer was contained in the silica-containing surface layer.

$$\text{Content ratio of silica in silica-containing surface}$$

$$\text{layer } (\text{mg/cm}^3) = (\text{W/V}) \times 100 \qquad\qquad \text{(ii)}$$

(In the expression, W represents the content (mg) of silica contained in the test specimen, and V represents the volume of the silica-containing surface layer in the test specimen, which is (thickness of silica-containing surface layer (cm)) $\times$ (lengthwise dimension of test specimen (cm)) $\times$ (widthwise dimension of test specimen (cm)).)

(7) Mortar Adhesion Strength of Waterproof Sheet

(i) Normal Portland cement (normal Portland cement produced by Taiheiyo Cement Corporation) and dried Toyoura standard sand were well mixed at a ratio, sand/cement = 2/1 (mass ratio), to which 0.5 part by mass of water was added, followed by well agitating, to prepare a mortar liquid.

(ii) A test specimen having a rectangular shape of width $\times$ length = 4 cm $\times$ 16 cm was cut out from the waterproof sheet in the longitudinal direction, and the test specimen was laid on the bottom of a die having a dimension of width $\times$ length $\times$ depth = 4 cm $\times$ 16 cm $\times$ 4 cm with the surface in contact with mortar directed upward. The mortar liquid prepared in the item (i) was poured on the test specimen, and after deaerating the mortar by agitation and vibration, the mortar liquid was cured at 20°C for 28 days while the die was placed in a sealed container for preventing water from being evaporated.

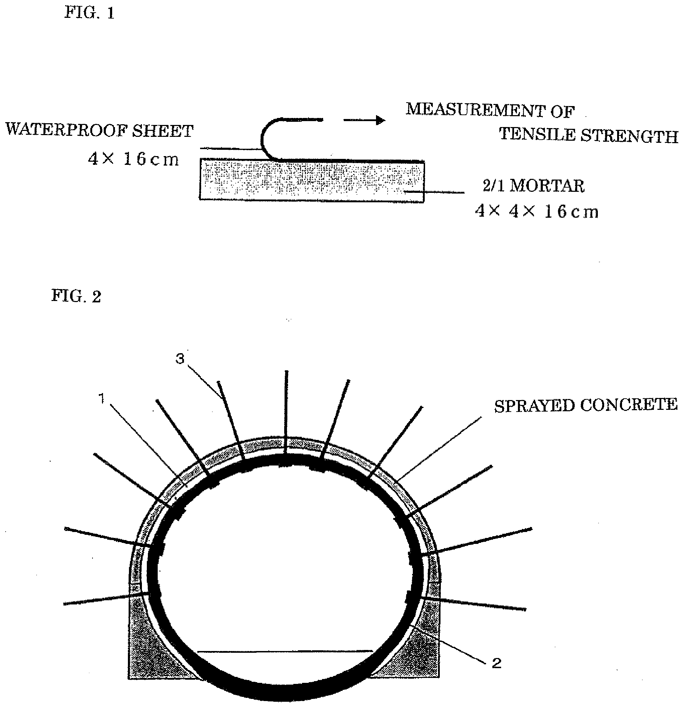

(iii) After completely cured, the mortar piece having the waterproof sheet adhered thereto was taken out from the die and placed with the surface adhered to the waterproof sheet directed upward. The end in the lengthwise direction of the waterproof sheet was peeled off by 2 cm from the mortar piece, and a polyester canvas cloth (a piece (width $\times$ length = 4 cm $\times$ 20 cm) of "E5 Base Cloth", produced by Kuraray Co., Ltd.) was connected firmly to the peeled end along the widthwise direction thereof with a staple. As shown in Fig. 1, the waterproof sheet was peeled at an angle of 180° and a speed of 10 mm/min until the sheet was peeled by further 2 cm (excluding the length of the peeled part for connecting to the polyester canvas cloth), at which the stress was continuously measured, and the average peeling strength (N) was calculated from the chart after peeling by 2 cm. The stress (N/cm) upon peeling per 1 cm was calculated by dividing the calculated value by 4 since the test specimen has a width of 4 cm. Three test specimens were cut out and collected from per one waterproof sheet and were subjected to the test, and the average value of the three test pieces was designated as the mortar adhesion strength.

(8) Determination of Presence of Water Leakage in Tunnel for Waterproof Sheet (I)

A watertight tunnel was built by a NATM method at a position 20 m below the ground with the waterproof sheet (I) . Specifically, as shown in Fig. 2, a cave hole having an ellipsoidal cross section (major diameter: about 15 m, minor diameter: about 10 m) was excavated at a position 20 m below the ground. Concrete was sprayed on the substantial upper half of the cave hole, and concrete was cast on the lower half thereof, on which the waterproof sheet 1 was laid with the silica-containing layer directed to the air (i.e., the surface having no silica-containing layer was made into contact with concrete) . After covering the waterproof sheet with concrete 2 (thickness of covered concrete: about 20 cm), rock bolts 3 were driven therein to built the tunnel. After completing the construction, the ground water level was restored, and the presence of water leakage in the tunnel was observed after lapsing 28 days.

(9) Method for measuring Watertightness on Deterioration in Evenness or Levelness for Waterproof Sheet (II)

Normal Portland cement and dried Toyoura standard sand were well mixed at a ratio, sand/cement = 2/1 (mass ratio), to which 0.5 part by mass of water was added, followed by well agitating, to prepare a mortar liquid. A sample sheet of the waterproof sheet (II) was cut out in a circular shape having a diameter of 34 cm, in which a hole having a diameter of 1 cm was formed at the center part. The sample sheet was installed in an iron frame of a circular cylinder column shape having an inner diameter of 10 cm and a height of 20 cm (capable of being vertically divided into two for releasing the frame by dividing the frame after curing the content) with the silica-containing surface layer directed upward if it was present. The waterproof sheet was fixed to the frame with the center thereof agreeing with the opening of the sheet, and the contact surface with the sheet was sealed with clay to prevent the mortar liquid from leaking. The mortar liquid thus prepared was poured thereon into the frame , and after deaerating the mortar by agitation, vibration and the like, the mortar liquid was cured at 20°C and 65%RH for 28 days while covering the upper part of the frame with a resin sheet for preventing water from being vaporized. After completely curing, the frame was released to produce the measurement sample 10 shown in Fig. 5. The sample was set in the apparatus for measuring watertightness on deterioration in evenness or levelness shown in Fig. 6, and applied with a water pressure of 0.3 MPa. After lapsing 28 days at 20°C with the water pressure applied, the water leakage amount (mL/day) from the lower part of the apparatus was measured with a metering pipette equipped. In the case where the entire amount of water in the apparatus (11,000 mL) flowed out until lapsing 28 days, 11,000 mL was designated as the measured value, and the measurement was terminated. In the apparatus for measuring watertightness on deterioration in evenness or levelness shown in Fig. 6, a circular water bath 70 was partitioned into an upper part and a lower part with a measurement sample constituted by a waterproof sheet sample 10 and a mortar column 20, and in the lower part, and porous stone 50 was charged, ceramic balls 60 having a diameter of 1 cm were spread thereon to make the lower surface of the waterproof sheet sample in contact with the ceramic balls 60, thereby providing a pseudo state of deterioration in evenness and levelness. Water 80 was charged to the upper part of the circular water bath 70 as described above, and pressurized air at 0.3 MPa was introduced thereto through an air pipe 90. In the case where water leaked from the measurement sample, it was measured with a metering pipette 100.

The kinds and contents of the ethylene-vinyl acetate copolymers and silica used in Examples and Comparative Examples are as shown below.

Ethylene-Vinyl Acetate Copolymers

Ethylene-Vinyl Acetate Copolymer (I)

"Evaflex EV45LX", produced by Du Pont-Mitsui Polychemicals Co., Ltd. (content ratio of vinyl acetate unit = 46% by mass, content ratio of ethylene unit = 54% by mass, MFR = 2.5 g per 10 minutes)

Ethylene-Vinyl Acetate Copolymer (II)

"Ultrathene 631", produced by Tosoh Corporation (content ratio of vinyl acetate unit = 20% by mass, content ratio of ethylene unit = 80% by mass, MFR = 1.5 g per 10 minutes) Ethylene-Vinyl Acetate Copolymer (III)
"Ultrathene 6M51A", produced by Tosoh Corporation (content ratio of vinyl acetate unit = 15% by mass, content ratio of ethylene unit = 85% by mass, MFR = 0.6 g per 10 minutes) Ethylene-Vinyl Acetate Copolymer (IV)
"Evaflex 420P", produced by Du Pont-Mitsui Polychemicals Co., Ltd. (content ratio of vinyl acetate unit = 60% by mass, content ratio of ethylene unit = 40% by mass, MFR = 15 g per 10 minutes) Ethylene-Vinyl Acetate Copolymer (V)
"Evaflex P1905", produced by Du Pont-Mitsui Polychemicals Co., Ltd. (content ratio of vinyl acetate unit = 19% by mass, content ratio of ethylene unit = 81% by mass, MFR = 2.5 g per 10 minutes)

Ethylene-Vinyl Acetate Copolymer (VI)

"Evaflex P2505", produced by Du Pont-Mitsui Polychemicals Co., Ltd. (content ratio of vinyl acetate unit = 25% by mass, content ratio of ethylene unit = 75% by mass, MFR = 2.0 g per 10 minutes)

Silica

Silica (i)

"Nipsil LP", produced by Tosoh Silica Corporation (content of silicon dioxide = 93% by mass, BET specific surface area = 200 $m^2$/g)

Silica (ii)

"Nipsil E200A", produced by Tosoh Silica Corporation (content of silicon dioxide = 94% by mass, BET specific surface area = 140 $m^2$/g)

Silica (iii)

"Nipsil E75", produced by Tosoh Silica Corporation (content of silicon dioxide = 94% by mass, BET specific surface area = 45 $m^2$/g)
Examples 1 to 3 and Comparative Examples 1 to 6 for a waterproof sheet used in a tunnel built by a mountain tunnel method and a shield tunneling method (waterproof sheet (I)) will be described below.

Example 1

(1) 50 parts by mass of the ethylene-vinyl acetate copolymer (I) and 50 parts by mass of the ethylene-vinyl acetate copolymer (II) were mixed and melt-kneaded at 170°C, and the mixture was extruded into a rod form at 170°C, followed by cutting, to produce pellets of an ethylene-vinyl acetate copolymer composition for a base material layer A.

(2) The pellets for a base material layer A produced in the item (1) were fed to one of the melt-kneading devices of a two-layer extrusion type extrusion molding machine (produced by Hitachi Zosen Corporation) and melt-extruded into a sheet form (base material layer A) through one of the T-dies (die lip width: 220 cm, die temperature: 200°C), and simultaneously, the ethylene-vinyl acetate copolymer (III) was melt-extruded into a sheet form (base material layer B) through the other of the T-dies (die lip width: 220 cm, die temperature: 200°C), both of which were laminated immediately after extruding to produce a laminated sheet (base sheet) (total thickness of the sheet: 2 mm) having a width of 220 cm, a thickness of the base material layer A of 0.4 mm and a thickness of the base material layer B of 1.6 mm. The ethylene-vinyl acetate copolymer composition constituting the base material layer A has a content ratio of a vinyl acetate unit (average value) of 33% by mass.

(3) 5 parts by mass of the silica (i), 85 parts by mass of toluene and 10 parts by mass of a 50% methanol solution of an ethylene-vinyl acetate copolymer ("Coponyl 9484", produced by Nippon Synthetic Chemical Industry Co., Ltd., content ratio of vinyl acetate unit in ethylene-vinyl acetate copolymer in solution: 80% by mass) were mixed and sufficiently agitated to prepare a silica dispersion liquid.

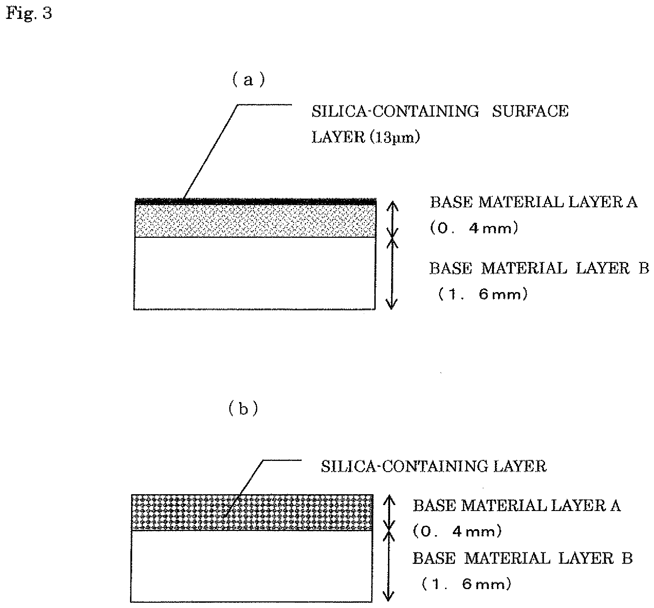

(4) The silica dispersion liquid prepared in the item (3) was coated on the surface on the side of the base material layer A of the laminated sheet (base sheet) produced in the item (2) at a ratio of 10 g/m$^2$ with a gravure roll, and then dried by heating to 130°C for 1 minute. The coating and drying operation was repeated three times to produce a waterproof sheet having a silica-containing surface layer on the surface layer part of the base material layer A shown in Fig. 3(a).

(5) The waterproof sheet obtained in the item (4) was measured and evaluated for the tensile breaking strength, the tensile breaking elongation, the thickness (depth) of the silica-containing surface layer from the surface of the base material layer A, the silica content in the silica-containing surface layer, the mortar adhesion strength and the presence of water leakage upon installing in a tunnel, according to the aforementioned methods, and the results shown in Table 1 below were obtained.

Fig. 4 is an electron micrograph of a cross section of the waterproof sheet obtained in Example 1 (an upper part of the base material layer A) obtained with an electron microscope ("Model S-2600N", produced by Hitachi High-Technologies Corporation, magnitude: 1,000). As shown in Fig. 4, a silica-containing surface layer having a thickness (depth) of 13 $\mu$m was formed on the surface layer part of the waterproof sheet. While silica was contained in the part under the silica-containing surface layer in a slight amount, but the entire amount of silica was contained in the part of a depth of 0.1 mm from the uppermost surface of the waterproof sheet, and no silica was contained in the deeper part.

Example 2

(1) 5 parts by mass of the silica (ii), 90 parts by mass of toluene and 5 parts by mass of the ethylene-vinyl acetate copolymer (I) were mixed and sufficiently agitated to prepare a silica dispersion liquid.

(2) The same operations as in Example 1 were performed except that the silica dispersion liquid prepared in the item (1) of this example was used instead of the silica dispersion liquid prepared in the item (3) of Example 1 to produce a waterproof sheet having a silica-containing surface layer on the surface layer part of the base material layer A.

(3) The waterproof sheet obtained in the item (2) was measured and evaluated for the tensile breaking strength, the tensile breaking elongation, the thickness (depth) of the silica-containing surface layer from the surface of the base material layer A, the silica content in the silica-containing surface layer, the mortar adhesion strength and the presence of water leakage upon installing in a tunnel, according to the aforementioned methods, and the results shown in Table 1 below were obtained.

Example 3

(1) 60 parts by mass of the ethylene-vinyl acetate copolymer (IV), 40 parts by mass of the ethylene-vinyl acetate copolymer (VI), 10 parts by mass of calcium carbonate ("Hakuenka O", produced by Shiraishi Calcium Kaisha, Ltd.) and 1 part by mass of a silicone lubricant ("LBT-100", produced by Sakai Chemical Industry Co., Ltd.) were melt-kneaded at 170°C, and the mixture was extruded into a rod form and cut to produce pellets for a base material layer A.

(2) 25 parts by mass of the ethylene-vinyl acetate copolymer (IV), 75 parts by mass of the ethylene-vinyl acetate copolymer (V), 10 parts by mass of calcium carbonate ("Hakuenka O", produced by Shiraishi Calcium Kaisha, Ltd.) and 1 part by mass of a silicone lubricant ("LBT-100", produced by Sakai Chemical Industry Co., Ltd.) were melt-kneaded at 170°C, and the mixture was extruded into a rod form and cut to produce pellets for a base material layer B.

(3) The pellets for a base material layer B produced in the item (2) were formed into a sheet having a width of 150 cm and a thickness of 0.4 mm by kneading and molding with a calender roll (produced by Nippon Roll MFG. Co., Ltd., inverted L four-roll type, diameter: 56 cm, width: 152 cm) at 170°C.

(4) The sheet produced in the item (3) was charged from the lower side of the calender roll, on which a sheet formed with the same ethylene-vinyl acetate copolymer composition having a width of 150 cm and a thickness of 0.4 mm produced by melting and calendering in the same manner as in the item (2) was laminated to provide a sheet having a width of 150 cm and a thickness of 0.8 mm. The operation was repeated further twice to produce finally a sheet for a base material layer B having a width of 150 cm and a thickness of 1.6 mm.

(5) The sheet for a base material layer B obtained in the item (4) was charged from the lower side of the same calender roll, on which the pellets for a base material layer A produced in the item (1) was discharged with the same calender roll to a sheet having a thickness of 0.4 mm (base material layer A), which was laminated to the sheet for a base material layer B to produce a laminated sheet (base sheet) having a width of 150 cm and a thickness of 2 mm (base material layer A: 0.4 mm, base material layer B: 1.6 mm).

(6) A silica dispersion liquid, which was the same as that prepared in the item (3) of Example 1, was coated on the surface on the side of the base material layer A of the laminated sheet (base sheet) produced in the item (5) at a ratio of 10 g/m$^2$ with a gravure roll, and then dried by heating to 130°C for 1 minute. The coating and drying operation was repeated three times to produce a waterproof sheet having a silica-containing surface layer on the surface layer part of the base material layer A.

(7) The waterproof sheet obtained in the item (6) was measured and evaluated for the tensile breaking strength, the tensile breaking elongation, the thickness (depth) of the silica-containing surface layer from the surface of the base material layer A, the silica content in the silica-containing surface layer, the mortar adhesion strength and the presence of water leakage upon installing in a tunnel, according to the aforementioned methods, and the results shown in Table 1 below were obtained.

Comparative Example 1

(1) A waterproof sheet was produced in the same manner as in Example 1 except that the addition amount of the silica upon preparing the silica dispersion liquid was changed to 1 part by mass in the item (3) of Example 1, and the number of the coating operation of the silica dispersion liquid with a gravure roll was changed to 1 in the item (4) of Example 1.

(2) The waterproof sheet obtained in the item (1) was measured and evaluated for the tensile breaking strength, the tensile breaking elongation, the thickness (depth) of the silica-containing surface layer from the surface of the base material layer A, the silica content in the silica-containing surface layer, the mortar adhesion strength and the presence of water leakage upon installing in a tunnel, according to the aforementioned methods, and the results shown in Table 2 below were obtained.

Comparative Example 2

(1) A waterproof sheet shown in Fig. 3(b), in which silica was dispersed over the entire base material layer A, was produced in the same manner as in Example 1 except that a base material layer A was formed with pellets obtained by adding the same silica (i) as used in the silica dispersion liquid in Example 1 at a ratio of 1% by mass upon production of the pellets for a base material layer A, and the silica dispersion liquid was not coated.

(2) The waterproof sheet obtained in the item (1) was measured and evaluated for the tensile breaking strength, the tensile breaking elongation, the thickness (depth) of the silica-containing surface layer from the surface of the base material layer A, the silica content in the silica-containing surface layer, the mortar adhesion strength and the presence of water leakage upon installing in a tunnel, according to the aforementioned methods, and the results shown in Table 2 below were obtained.

Comparative Example 3

(1) A waterproof sheet having a silica-containing surface layer on the surface layer part of the base material layer A was produced in the same manner as in Example 1 except that the silica (iii) was used instead of the silica (i).
(2) The waterproof sheet obtained in the item (1) was measured and evaluated for the tensile breaking strength, the tensile breaking elongation, the thickness (depth) of the silica-containing surface layer from the surface of the base material layer A, the silica content in the silica-containing surface layer, the mortar adhesion strength and the presence of water leakage upon installing in a tunnel, according to the aforementioned methods, and the results shown in Table 2 below were obtained.

Comparative Example 4

(1) A waterproof sheet having a silica-containing surface layer on the surface layer part of the base material layer A was produced in the same manner as in Example 1 except that the mixing ratio in the pellets of the ethylene-vinyl acetate copolymer composition for a base material layer A was changed to (ethylene-vinyl acetate copolymer (I))/(ethylene-vinyl acetate copolymer (II)) = 30/70 (mass ratio).
(2) The waterproof sheet obtained in the item (1) was measured and evaluated for the tensile breaking strength, the tensile breaking elongation, the thickness (depth) of the silica-containing surface layer from the surface of the base material layer A, the silica content in the silica-containing surface layer, the mortar adhesion strength and the presence of water leakage upon installing in a tunnel, according to the aforementioned methods, and the results shown in Table 2 below were obtained.

Comparative Example 5

(1) A waterproof sheet having a silica-containing surface layer on the surface layer part of the base material layer A was produced in the same manner as in Example 1 except that the organic solvent used for preparing the silica dispersion liquid in the item (3) of Example 1 was changed from toluene to methanol.

(2) The waterproof sheet obtained in the item (1) was measured and evaluated for the tensile breaking strength, the tensile breaking elongation, the thickness (depth) of the silica-containing surface layer from the surface of the base material layer A, the silica content in the silica-containing surface layer, the mortar adhesion strength and the presence of water leakage upon installing in a tunnel, according to the aforementioned methods, and the results shown in Table 2 below were obtained.

Comparative Example 6

(1) A sheet for a base material layer A having a width of 220 cm and a thickness of 0.4 mm was produced by melt-extruding the same pellets of the ethylene-vinyl acetate copolymer composition for a base material layer A as used in Example 1 at a temperature (die temperature) of 200°C by using a T-die extrusion molding machine (produced by Hitachi Zosen Corporation).
(2) A sheet for a base material layer B having a width of 220 cm and a thickness of 1.6 mm was produced in the same manner as in item (1) with a pellet sheet of the same ethylene-vinyl acetate copolymer (III) as used for the base material layer B in Example 1.
(3) A polyester fiber woven fabric (warp thread fineness: 550 dtex, thread density: 19 per 2.54 cm, weft thread fineness: 550 dtex, thread density: 20 per 2.54 cm) was held between the sheet for a base material layer A produced in the item (1) and the sheet for a base material layer B produced in the item (2), and the assembly was pressed under heating at a temperature of 170°C to produce a laminated sheet having an intermediate woven fabric layer.
(4) The same operations as in the items (3) and (4) of Example 1 were performed on the surface of the base material layer A of the laminated sheet produced in the item (3) to produce a waterproof sheet having a silica-containing surface layer on the surface layer part of the base material layer A. Thereafter, silica was coated thereon in the same manner as in Example 1.

(5) The waterproof sheet obtained in the item (4) was measured and evaluated for the tensile breaking strength, the tensile breaking elongation, the thickness (depth) of the silica-containing surface layer from the surface of the base material layer A, the silica content in the silica-containing surface layer, the mortar adhesion strength and the presence of water leakage upon installing in a tunnel, according to the aforementioned methods, and the results shown in Table 2 below were obtained.

Table 1

| | Example 1 | Example 2 | Example 3 |
|---|---|---|---|
| Tensile breaking strength (MPa) | 19.8 | 20.1 | 23.4 |
| Tensile breaking elongation (%) | 1,079 | 1,052 | 825 |
| silica<br> Kind<br> Silicon dioxide content (% by mass)<br> BET specific surface area ($m^2$/g) | (i)<br>93<br>200 | (ii)<br>94<br>140 | (i)<br>93<br>200 |
| Thickness of silica-containing layer ($\mu$m)[1] | 13 | 14 | 12 |
| Silica content (mg/$cm^3$)[2] | 49 | 53 | 45 |
| Composition of resins constituting surface layer part[3]<br>Vinyl acetate unit content (% by mass)[4] | (I)/(II) = 50/50<br>33 | (I)/(II) = 50/50<br>33 | (IV)/(VI) = 60/40<br>46 |
| Mortar adhesion strength (N/cm) | 19.3 | 20.7 | 18.7 |
| Water leakage in tunnel | none | none | none |

1) thickness from surface of silica-containing layer (silica-containing surface layer)
2) content ratio of silica in silica-containing layer (silica-containing surface layer)
3) kind and mixing ratio of ethylene-vinyl acetate copolymers constituting silica-containing layer (silica-containing surface layer)
4) average content ratio of vinyl acetate unit in ethylene-vinyl acetate copolymer (composition) constituting silica-containing layer (silica-containing surface layer)

Table 2

| | Comparative Example 1 | Comparative Example 2 | Comparative Example 3 | Comparative Example 4 | Comparative Example 5 | Comparative Example 6 |
|---|---|---|---|---|---|---|
| Tensile breaking strength (MPa) | 19.3 | 19.4 | 19.3 | 20.6 | 19.0 | 28.9 |
| Tensile breaking elongation (%) | 1,063 | 995 | 1,020 | 982 | 1,097 | 24[5] |
| Silica<br> Kind<br>Silicon dioxide content (% by mass)<br> BET specific surface area ($m^2$/g) | (i)<br><br>93<br><br>200 | (i)<br><br>93<br><br>200 | (iii)<br><br>94<br><br>45 | (i)<br><br>93<br><br>200 | (i)<br><br>93<br><br>200 | (i)<br><br>93<br><br>200 |

(continued)

| | Comparative Example 1 | Comparative Example 2 | Comparative Example 3 | Comparative Example 4 | Comparative Example 5 | Comparative Example 6 |
|---|---|---|---|---|---|---|
| Thickness of silica-containing layer ($\mu$m)[1] | 4 | 400 | 11 | 8 | 2 | 13 |
| Silica content (mg/cm$^3$)[2] | 18 | 10 | 55 | 30 | 9 | 50 |
| Composition of resins constituting surface layer part[3] | (I)/(II) = 50/50 | (I)/(II) = 50/50 | (I)/(II) = 50/50 | (I)/(II) = 30/70 | (I)/(II) = 50/50 | (I)/(II) = 50/50 |
| Vinyl acetate unit content (% by mass)[4] | 33 | 33 | 33 | 27.8 | 33 | 33 |
| Mortar adhesion strength (N/cm) | 6.3 | 1.7 | 5.9 | 3.3 | 1.9 | 18.3 |
| Water leakage in tunnel | found | found | found | found | found | found |

1) thickness from surface of silica-containing layer (silica-containing surface layer)
2) content ratio of silica in silica-containing layer (silica-containing surface layer)
3) kind and mixing ratio of ethylene-vinyl acetate copolymers constituting silica-containing layer (silica-containing surface layer)
4) average content ratio of vinyl acetate unit in ethylene-vinyl acetate copolymer (composition) constituting silica-containing layer (silica-containing surface layer)
5) low tensile breaking elongation owing to woven fabric layer present in waterproof sheet

As found in the results shown in Table 1, the waterproof sheets (I) of Examples 1 to 3 each have a silica-containing surface layer containing silica ($SiO_2 \geq 90\%$) in a concentration in a range of from 30 to 200 mg/cm$^3$ formed over a depth of from 5 to 30 $\mu$m from the surface of the waterproof sheet, have a high tensile breaking strength of 10 MPa or more (particularly 19 MPa or more) and a high tensile breaking elongation of 300% or more (particularly 825% or more), have a high mortar adhesion strength of 18.7 N/cm or more, are excellent in adhesion property with concrete, and cause no water leakage upon installing in a tunnel.

On the other hand, the waterproof sheets of Comparative Examples 1 to 5 each have a mortar adhesion strength of less than 10 N/cm, which means inferiority in adhesion property with concrete, and cause water leakage upon installing in a tunnel.

The waterproof sheet of Comparative Example 6 has a mortar adhesion strength of 10 N/cm or more, but cannot be stretched with a low tensile breaking elongation of 24% owing to the woven fabric layer, and thus it suffers breakage due to stress upon installation in a tunnel or after installation, thereby causing water leakage in a tunnel.

Examples 4 and 5 and Comparative Examples 7 to 11 for a waterproof sheet used in a tunnel built by a cut and cover tunneling method (waterproof sheet (II)) will be described below.

Example 4

(1) A resin (formulation B, average vinyl acetate group content: 22%) containing 50 parts of the ethylene-vinyl acetate copolymer (VI) and 50 parts of the ethylene-vinyl acetate copolymer (V) having 10 parts of calcium carbonate and 1 part of a silicone lubricant ("LBT-100", produced by Sakai Chemical Industry Co., Ltd.) added thereto was kneaded with a calender roll (produced by Nippon Roll MFG. Co., Ltd., inverted L type calender roll, diameter: 22 inch, width:

60 inch) to form a sheet having a thickness of 0.4 mm and a width of 1 m, to which a polyester base cloth (warp thread fineness: 550 dtex, thread density: 19 per 2.54 cm, weft thread fineness: 550 dtex, thread density: 20 per 2.54 cm, width: 1m) was adhered to provide a sheet having a thickness of 0.5 mm.

(2) The sheet was charged from the lower side of the calender roll, and a sheet of the same resin having a thickness of 0.4 mm formed by calendering in the same manner was superimposed and adhered to the side having the base cloth to provide a sheet of a base material layer B having a thickness of 0.9 mm. A sheet of a base material layer A having a thickness of 0.4 mm, which was formed by kneading a resin (formulation A, average vinyl acetate group content: 33%) containing 60 parts of the ethylene-vinyl acetate copolymer (I) and 40 parts of the ethylene-vinyl acetate copolymer (VI) having 10 parts of calcium carbonate and 1 part of a silicone lubricant ("LBT-100", produced by Sakai Chemical Industry Co., Ltd.) added thereto, was adhered thereto to provide a sheet having a thickness of 1.3 mm.

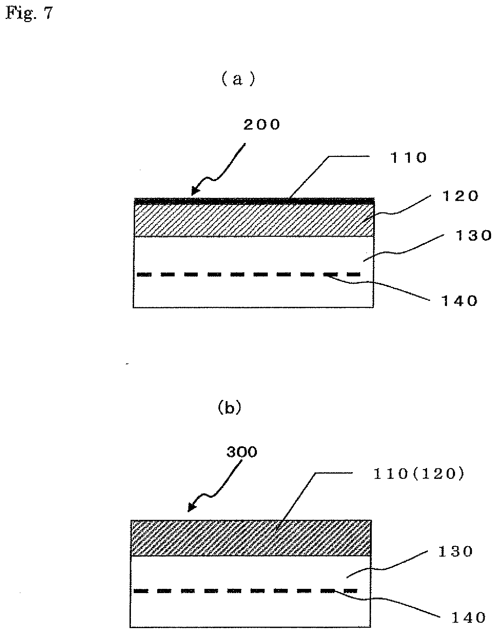

(3) Subsequently, 5 parts of the silica (i), 90 parts of toluene and 5 parts of a 50% methanol solution of an ethylene-vinyl acetate copolymer having a vinyl acetate group content of 80% ("Coponyl 9484", produced by Nippon Synthetic Chemical Industry Co., Ltd.) as a thickener were mixed and sufficiently agitated to prepare a liquid, which was coated on the surface on the side of the resin layer of the formulation A of the resin sheet produced above at a ratio of 10 $g/m^2$ with a gravure roll (130 mesh) and then dried at 130°C for 1 minute. The operation was repeated twice to provide a waterproof sheet (II) having a silica-containing surface layer containing 49 $mg/cm^3$ of silica at a depth of 13 $\mu$m from the surface of the sheet. The resulting waterproof sheet (II) had a structure shown in Fig. 7(a), and the physical properties thereof were a tensile breaking strength of 28.3 MPa, a tensile breaking elongation of 17.2% and a tear strength of 138 N. The sheet had a mortar adhesion strength of 18.4 N/cm and a watertightness on deterioration in evenness or levelness of 2.3 mL/day.

Example 5

A waterproof sheet was produced in the same manner as in Example 4 except that the formulation of the silica coating liquid was changed to 5 parts of the silica (ii) having a silicon dioxide content of 93% and a BET specific surface area of 140 $m^2/g$, 5 parts of the ethylene-vinyl acetate copolymer (I) having a vinyl acetate group content of 46% as a thickener and 90 parts of toluene. The silica was contained at a depth of 15 $\mu$m from the surface, and the silica content was 53 $mg/cm^3$. The waterproof sheet had a mortar adhesion strength of 19.5 N/cm and a watertightness on deterioration in evenness or levelness of 3.1 mL/day.

Comparative Example 7

A waterproof sheet was produced in the same manner as in Example 4 except that the formulation of the silica coating liquid was changed to 1 part of silica, 5 parts of a thickener and 94 parts of toluene. The silica was contained at a depth of 2.4 $\mu$m from the surface, and the silica content was 37 $mg/cm^3$. The waterproof sheet had a mortar adhesion strength of 5.1 N/cm and a watertightness on deterioration in evenness or levelness of 11,000 mL/day or more.

Comparative Example 8

A waterproof sheet was produced in the same manner as in Example 4 except that silica having a BET specific surface area of 45 $m^2/g$ (Nipsil E75, produced by Tosoh Silica Corporation) was used. The silica content was 43 $mg/cm^3$ at a depth of 14 $\mu$m from the surface. The waterproof sheet had a mortar adhesion strength of 5.3 N/cm and a watertightness on deterioration in evenness or levelness of 11,000 mL/day or more.

Comparative Example 9

A waterproof sheet was produced in the same manner as in Example 4 except that the resin of the silica-containing layer (formulation A) was changed to an ethylene-vinyl acetate copolymer having a vinyl acetate group content of 25% (Evaflex P2505, produced by Du Pont-Mitsui Polychemicals Co., Ltd.). The silica-containing surface layer was at a depth of 14 $\mu$m from the surface, and the silica content was 51 $mg/cm^3$. The waterproof sheet had a mortar adhesion strength of 2.2 N/cm and a watertightness on deterioration in evenness or levelness of 11,000 mL/day or more.

Comparative Example 10

In production of a waterproof sheet in the same manner as in Example 4, 1% by mass of silica (Nipsil LP) was added upon kneading the resin of the formulation A with a calender roll, thereby producing a sheet having a thickness of 0.4 mm. When 1% by mass of the silica was to be added in this case, the sheet was stuck to the roll upon kneading to fail to produce a sheet. The resin sheet of the formulation B was adhered thereto without coating the silica liquid with a gravure roll to produce a waterproof sheet having a thickness of 1.3 mm. The thickness of the silica-containing surface layer (depth from the surface) was 400 $\mu$m since the silica contained throughout the sheet of the formulation A, and the silica content was 10 mg/cm$^3$. The structure of the resulting waterproof sheet is shown in Fig. 7 (b). The waterproof sheet had a mortar adhesion strength of 1. 4 N/cm and a watertightness on deterioration in evenness or levelness of 11,000 mL/day or more.

Comparative Example 11

A waterproof sheet was produced in the same manner as in Example 4 except that the number of the coating operation of the silica liquid with a gravure roll was changed to 10. The silica content was 253 mg/cm$^3$ at a depth of 32 $\mu$m from the surface. The waterproof sheet had a mortar adhesion strength of 2.5 N/cm and a watertightness on deterioration in evenness or levelness of 11,000 mL/day or more.

Table 3

| | | Unit | Example | | Comparative Example | | | | |
|---|---|---|---|---|---|---|---|---|---|
| | | | 4 | 5 | 7 | 8 | 9 | 10 | 11 |
| Silica layer | Vinyl acetate content | % by mass | 33 | 33 | 33 | 33 | 25 | 33 | 33 |
| | BET specific surface area of silica | $m^2/g$ | 200 | 140 | 200 | 45 | 200 | 200 | 200 |
| | Thickness | $\mu m$ | 13 | 15 | 2.4 | 14 | 14 | 400 | 32 |
| | Silica content | $mg/cm^3$ | 49 | 53 | 37 | 43 | 51 | 10 | 253 |
| Physical property | Tensile breaking strength | MPa | 28.3 | ditto | ditto | ditto | ditto | 27.9 | 28.3 |
| | Tensile breaking elongation | % | 17.2 | ditto | ditto | ditto | ditto | 18.1 | 17.2 |
| | Tear strength | N | 138 | ditto | ditto | ditto | ditto | 143 | 138 |
| Characteristics | Mortar adhesion strength | (N/cm) | 18.4 | 19.5 | 5.1 | 5.3 | 2.2 | 1.4 | 2.5 |
| | Watertightness on deterioration in evenness or levelness | mL/day | 2.3 | 3.1 | > 11,000 | > 11,000 | > 11,000 | > 11,000 | > 11,000 |
| Determination | | | passed | passed | failed | failed | failed | failed | failed |

EP 2 042 687 B1

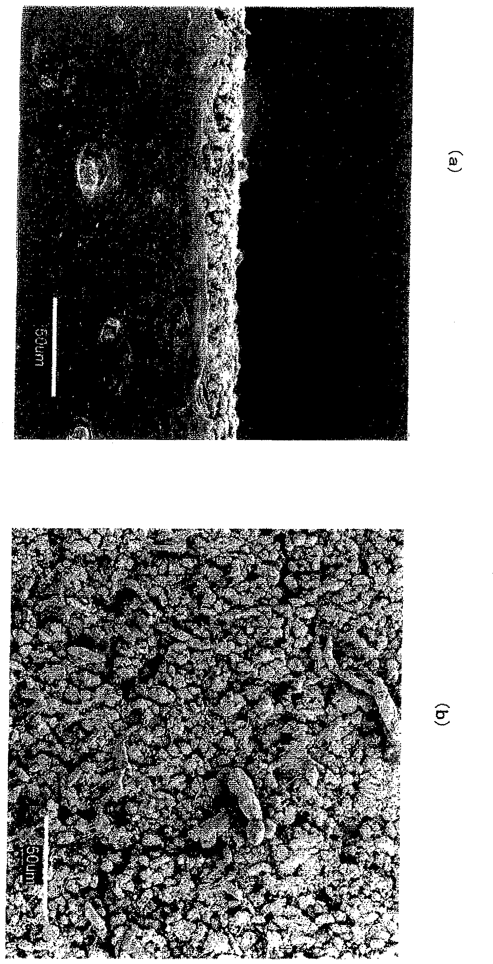

As found in the results shown in Table 3, the waterproof sheets (II) of Examples 4 and 5 each have a silica-containing surface layer containing silica ($SiO_2 \geq 90\%$) in a concentration in a range of from 30 to 200 mg/cm$^3$ formed over a depth (thickness) of from 5 to 30 $\mu$m from the surface of the waterproof sheet, have a high tensile breaking strength of 20 MPa or more and a tensile breaking elongation of from 10 to 50%, have a high mortar adhesion strength of 15 N/cm or more, are excellent in adhesion property with concrete, and have a watertightness on deterioration in evenness or levelness of 10 mL/day or less. It is understood from the electron micrograph of the cross section of the silica-containing surface layer of the waterproof sheet (II) of Example 4 in Fig. 8 (a) and the electron micrograph of the upper surface of the silica-containing surface layer in Fig. 8(b) that the silica-containing surface layer contributes to the mortar adhesion strength.

On the other hand, the waterproof sheets of Comparative Examples 7 to 11 each have a mortar adhesion strength of less than 6 N/cm, which means inferiority in adhesion property with concrete, show a watertightness on deterioration in evenness or levelness of 11, 000 mL/day or more, and thus cannot be used as a waterproof sheet for a cut tunnel.

[Industrial Applicability]

The waterproof sheet obtained by the method of the present invention is firmly adhered to and integrated with a tunnel structure formed with concrete, whereby no gap is formed between the waterproof sheet and the concrete structure even after lapsing a prolonged period of time from construction, and even when stress is applied to the waterproof sheet upon installation in a tunnel or after installation of the waterproof sheet, no problem including breakage and the like occurs, and water seeping from the earth or the ground can be prevented smoothly from leaking into the tunnel structure. Accordingly, the waterproof sheet (I) in particular can be effectively used as a waterproof sheet for a tunnel built by a mountain tunnel method or a shield tunneling method.

The waterproof sheet (II) for a tunnel built by a cut and cover tunneling method has the prescribed strength and a high adhesion property with concrete, and therefore, by installing the waterproof sheet (II) obtained by the method of the present invention between the ground and a concrete tunnel structure, the waterproof sheet after installation is adhered and integrated with the concrete structure, and even when the installed surface suffers large deterioration in evenness or levelness, or ground subsidence or earthquake occurs, rainwater and groundwater can be prevented from invading the interior of the concrete structure. Accordingly, the waterproof sheet can be effectively used as a waterproof sheet for a tunnel built by a cut and cover tunneling method.

## Claims

1. Method of producing a waterproof sheet for a tunnel which is to be built by a mountain tunnel method or a shield tunneling method comprising a base sheet containing a synthetic resin which is an ethylene-vinyl acetate copolymer having a content of a structural unit derived from vinyl acetate of 30% by mass or more, and having on a surface thereof a silica-containing surface layer containing silica having a silicon dioxide content of 90% by mass or more, the method comprising a step of coating the base sheet with a silica dispersion liquid and drying under heating to form the silica-containing surface layer,
the silica dispersion liquid comprising (i) to (iii):

   (i) silica having a silicon dioxide content of 90% by mass or more, dispersed in
   (ii) an organic solvent exhibiting dissolution action on said ethylene-vinyl acetate copolymer of the base sheet, and
   (iii) a thickener having affinity with the synthetic resin of the base sheet, the thickener being an ethylene-vinyl acetate copolymer having a content of structural unit derived from vinyl acetate of 30 to 90% by mass,

   the silica in the silica-containing surface layer being present in a content of from 30 to 200 mg/cm$^3$,
   the silica-containing surface layer being formed over a depth of from 5 to 30 $\mu$m from the surface of the waterproof sheet,
   the waterproof sheet having a tensile breaking strength of 10 MPa or more, a tensile breaking elongation of 300% or more, and a mortar adhesion strength of 15 N/cm or more,
   wherein the mortar adhesion strength of the waterproof sheet is an average peeling strength (N) per 1 cm of the waterproof sheet upon peeling the waterproof sheet from one end at an angle of 180° and a speed of 10 mm/min by 2 cm off from a cured product of a mortar liquid, which is prepared by mixing 100 parts by mass of Portland cement, 200 parts by mass of standard sand and 50 parts by mass of water, and is then cast to a thickness (depth) of 4 cm on the silica-containing surface layer as the concrete adhesion surface of the waterproof sheet cut into a prescribed dimension, followed by curing in a sealed state at 20 °C for 28 days.

**2.** The method of claim 1, wherein the silica contained in the silica-containing surface layer has a BET specific surface area of 80 m$^2$/g or more.

**3.** Use of the waterproof sheet obtained by the method of claim 1 or 2 in building a tunnel by a mountain tunnel method or a shield tunneling method.

**Patentansprüche**

**1.** Verfahren zur Herstellung eines wasserdichten Flächengebildes für einen Tunnel, der durch ein Bergtunnelverfahren oder ein Schildvortriebsverfahren gebaut wird, umfassend ein Grundflächengebilde, das ein synthetisches Harz enthält, das ein Ethylen-vinylacetat-copolymer ist, das einen Gehalt einer Struktureinheit, abgeleitet von Vinylacetat, von 30 Massen-% oder mehr aufweist und das auf einer Oberfläche davon eine Siliciumdioxid-haltige Oberflächenschicht aufweist, die Siliciumdioxid enthält, das einen Siliciumdioxidgehalt von 90 Massen-% oder mehr aufweist, wobei das Verfahren einen Schritt des Beschichtens des Grundflächengebildes mit einer Siliciumdioxid-Dispersionsflüssigkeit und Trocknen unter Erwärmen umfasst, um die Siliciumdioxid-haltige Oberflächenschicht zu bilden, wobei die Siliciumdioxid-Dispersionsflüssigkeit (i) bis (iii) umfasst:

(i) Siliciumdioxid mit einem Siliciumdioxidgehalt von 90 Massen-% oder mehr, dispergiert in

(ii) einem organischen Lösungsmittel, das eine Lösungswirkung auf dem Ethylen-vinylacetat-copolymer des Grundflächengebildes aufweist und

(iii) ein Verdickungsmittel mit Affinität zu dem synthetischen Harz des Grundflächengebildes, wobei das Verdickungsmittel ein Ethylen-vinylacetat-copolymer ist, das einen Gehalt einer Struktureinheit, abgeleitet von Vinylacetat, von 30 bis 90 Massen-% aufweist,

wobei das Siliciumdioxid in der Siliciumdioxid-haltigen Oberflächenschicht in einem Gehalt von 30 bis 200 mg/cm$^3$ vorliegt,

wobei die Siliciumdioxid-haltige Oberflächenschicht über einer Tiefe von 5 bis 30 μm von der Oberfläche des wasserdichten Flächengebildes gebildet wird,

wobei das wasserdichte Flächengebilde eine Zugbruchfestigkeit von 10 MPa oder mehr, eine Zugbruchdehnung von 300% oder mehr und eine Haftfestigkeit des Mörtels von 15 N/cm oder mehr aufweist,

wobei die Haftfestigkeit des Mörtels des wasserdichten Flächengebildes eine durchschnittliche Abziehfestigkeit (N) pro 1 cm des wasserdichten Flächengebildes ist beim Abziehen von 2 cm des wasserdichten Flächengebildes von einem Ende in einem Winkel von 180° und einer Geschwindigkeit von 100 mm/min von einem gehärteten Produkt aus einer Mörtelflüssigkeit, die hergestellt ist durch Mischen von 100 Massenteilen Portland-Zement, 200 Massenteilen Standardsand und 50 Massenteilen Wasser und dann auf die Siliciumdioxid-haltige Oberflächenschicht bis auf eine Dicke (Tiefe) von 4 cm vergossen wird, da die Betonhaftoberfläche des wasserdichten Flächengebildes zu einer vorgegebenen Abmessung zugeschnitten ist, gefolgt von Härten in einen abgedichteten Zustand bei 20 °C für 28 Tage.

**2.** Das Verfahren gemäß Anspruch 1, wobei das Siliciumdioxid, das in der Siliciumdioxid-haltigen Oberflächenschicht enthalten ist, eine BET-spezifische Oberfläche von 80 m$^2$/g oder mehr aufweist.

**3.** Verwendung des wasserdichten Flächengebildes, erhalten durch das Verfahren gemäß Anspruch 1 oder 2 durch Bilden eines Tunnels mittels eines Bergtunnelverfahrens oder eines Schildvortriebsverfahrens.

**Revendications**

**1.** Procédé de production d'une feuille imperméable à l'eau destinée à un tunnel qui doit être construit selon un procédé de forage de tunnel dans une montagne ou un procédé de forage de tunnel avec bouclier comprenant une feuille de base contenant une résine synthétique qui est un copolymère d'éthylène-acétate de vinyle présentant une teneur en motif structurel dérivé de l'acétate de vinyle de 30 % en masse ou plus, et ayant sur une surface de celle-ci une couche superficielle contenant de la silice contenant une silice présentant une teneur en dioxyde de silicium de 90 % en masse ou plus, le procédé comprenant une étape de revêtement de la feuille de base avec un liquide de dispersion de silice et de séchage en chauffant pour former la couche superficielle contenant de la silice, le liquide de dispersion de silice comprenant (i) à (iii) :

(i) une silice présentant une teneur en dioxyde de silicium de 90 % en masse ou plus, dispersée dans

(ii) un solvant organique ayant une action de dissolution sur ledit copolymère d'éthylène-acétate de vinyle de la feuille de base, et

(iii) un épaississant ayant une affinité pour la résine synthétique de la feuille de base, l'épaississant étant un copolymère d'éthylène-acétate de vinyle présentant une teneur en motif structurel dérivé de l'acétate de vinyle de 30 à 90 % en masse,

la silice dans la couche superficielle contenant de la silice étant présente à une teneur de 30 à 200 mg/cm$^3$,

la couche superficielle contenant de la silice étant formée sur une profondeur allant de 5 à 30 $\mu$m à partir de la surface de la feuille imperméable à l'eau,

la feuille imperméable à l'eau présentant une résistance à la rupture par traction de 10 MPa ou plus, un allongement à la rupture par traction de 300 % ou plus, et une force d'adhérence de mortier de 15 N/cm ou plus,

dans lequel la force d'adhérence du mortier de la feuille imperméable à l'eau est une force moyenne de pelage (N) pour 1 cm de la feuille imperméable à l'eau lors du pelage de la feuille imperméable à l'eau à partir d'une extrémité à un angle de 180° et à une vitesse de 10 mm/minute de 2 cm à partir d'un produit durci d'un liquide de mortier, qui est préparé par le mélange de 100 parties en masse de ciment Portland, 200 parties en masse de sable normal et 50 parties en masse d'eau, et ensuite coulé à une épaisseur (profondeur) de 4 cm sur la couche superficielle contenant de la silice en tant que surface d'adhérence de béton de la feuille imperméable à l'eau découpée à des dimensions prédéterminées, ce qui est suivi d'un durcissement dans un état étanche à 20 °C pendant 28 jours.

2. Procédé selon la revendication 1, dans lequel la silice contenue dans la couche superficielle contenant de la silice présente une surface spécifique BET de 80 m$^2$/g ou plus.

3. Utilisation de la feuille imperméable à l'eau obtenue grâce au procédé selon la revendication 1 ou 2 pour construire un tunnel selon un procédé de forage de tunnel dans une montagne ou un procédé de forage de tunnel avec bouclier.

FIG. 1

WATERPROOF SHEET
4 × 16 cm

MEASUREMENT OF
TENSILE STRENGTH

2/1 MORTAR
4 × 4 × 16 cm

FIG. 2

3

1

SPRAYED CONCRETE

2

Fig. 3

( a )

SILICA-CONTAINING SURFACE
LAYER (13μm)

BASE MATERIAL LAYER A
(0. 4 mm)

BASE MATERIAL LAYER B
(1. 6 mm)

( b )

SILICA-CONTAINING LAYER

BASE MATERIAL LAYER A
(0. 4 mm)

BASE MATERIAL LAYER B
(1. 6 mm)

FIG. 4

20um

FIG. 5

（a）

Φ10cm

20cm

20

10

Φ1cm

Φ34cm

（b）

20

30

10

Fig. 6

PRESSURIZED AIR AT 0.3MPa

Fig. 7

(a)

200

110

120

130

140

(b)

300

110(120)

130

140

(a)

(b)

Fig.9

CUT AND COVER TUNNEL CROSS SECTION

GROUND LEVEL

GROUND

CONCRETE STRUCTURE

SMW (BRACING WALL)

GROUNDWATER
LEVEL

FLOOR CONCRETE

WATERPROOF SHEET(II)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7329228 A
- JP 9052330 A
- JP 2001115791 A
- JP 2002294015 A
- US 20050106967 A1

**Non-patent literature cited in the description**

- Tetsudo Kozobutu tou Sekkei Hyojun, dou Kaisetu (Kaisaku Tunnel). Standard Design of Railroad Structures and Explications thereof (Cut Tunnel). Maruzen Co., Ltd, 30 March 2001